# DEMANDE DE BREVET EUROPEEN

(11) **EP 1 010 993 A1**
(43) Date de publication de la demande: **21.06.2000**
(21) Numéro de dépôt: 99403031.0
(22) Date de dépôt: 06.12.1999
(51) Int. Cl.: G01V 8/20

(54) **Module de détection et dispositif de positionnement, de maintien ou de serrage de pièce de carrosserie**

(30) Priorité: 09.12.1998 FR 9815515
(71) Demandeur: Genus Technologies, 92320 Châtillon (FR)
(72) Inventeur: Boris, Jean-Mathieu, F-75116 Paris (FR); Roudier, Fabrice, F-78820 Juziers (FR)
(74) Mandataire: Kaspar, Jean-Georges

(57) **Abrégé**

Un dispositif de positionnement, de maintien ou de serrage de pièce de carrosserie comporte un corps (6-7, 12) présentant une fente (8) permettant le passage d'une cible ou d'un drapeau (11, 14) à détecter. Le corps (6-7, 12) est équipé d'un module de détection comportant au moins deux capteurs optiques ( 4, 5) à transmission pour détecter la position d'une dite cible ou drapeau (11, 14) et la fente (8, 13) présente une largeur inférieure à la largeur (1) de transmission du capteur optique (4 ou 5).

## Description

L'invention est relative à un module de détection, notamment pour un dispositif de positionnement, de maintien ou de serrage de pièce de carrosserie.

L'invention est également relative à un dispositif de positionnement, de maintien ou de serrage de pièce de carrosserie équipé d'un module de détection selon l'invention.

Les dispositifs de positionnement, de maintien ou de serrage de pièce de carrosserie sont utilisés en fabrication automobile : parmi ces dispositifs, on trouve notamment des serrages, des porte-pilotes, et d'autres organes de maintien.

Habituellement, la détection de position des dispositifs connus s'effectue au moyen de capteurs inductifs fournissant un signal indiquant l'état ou la position du dispositif.

L'utilisation en fabrication automobile de postes de soudure perfectionnés et de moyens robotisés, en particulier pour l'assemblage de tôles de carrosserie, conduit à une production de champs magnétiques d'intensités élevées qui sont à terme susceptibles d'empêcher le bon fonctionnement des capteurs inductifs.

L'invention a pour but de remédier à ces inconvénients, en proposant un nouveau module de détection insensible aux champs magnétiques, de construction simple et économique, tout en permettant une connexion facile à un automate programmable ou une centrale de commande.

L'invention a pour objet un dispositif de positionnement, de maintien ou de serrage de pièce de carrosserie, du type comportant au moins deux capteurs de position, caractérisé en ce que chaque capteur est un capteur optique à transmission.

Selon d'autres caractéristiques de l'invention :
- chaque capteur optique à transmission est un capteur à fourche comprenant une branche avec un émetteur optique et une branche à récepteur optique,
- chaque capteur optique à transmission est un capteur à rayonnement infrarouge,
- le module comporte un boîtier portant au moins deux capteurs à fourche.

L'invention a également pour objet un dispositif équipé d'un module selon l'invention, caractérisé en ce que le module de détection est monté à l'intérieur du corps du dispositif en regard d'une fente de passage d'une cible ou d'un drapeau à détecter.

Selon d'autres caractéristiques de l'invention :
- ladite fente présente une largeur inférieure à la largeur de transmission du capteur optique,
- lorsque le corps est assemblé à partir de deux demi-corps, le module est monté dans des évidements pratiqués chacun dans un demi-corps,
- lorsque le corps est constitué par usinage d'un bloc unique, le module est monté dans un évidement du corps apte à être obturé par un couvercle,
- le module de détection peut également présenter une conformation apte à obturer le corps du dispositif de manière sensiblement étanche.

L'invention sera mieux comprise grâce à la description qui va suivre donnée à titre d'exemple non limitatif en référence aux dessins annexés dans lesquels :
- la figure 1 représente schématiquement une vue en perspective dans le sens de la flèche I de la figure 2 d'un module de détection selon l'invention,
- la figure 2 représente schématiquement une vue en perspective dans le sens de la flèche II de la figure 1 d'un module de détection selon l'invention,
- la figure 3 représente schématiquement une vue partielle en section d'un montage d'un module de détection vu selon la ligne III-III de la figure 2 dans un dispositif selon l'invention,
- La figure 4 représente schématiquement une vue partielle en section d'un montage d'un module de détection vu selon la ligne IV-IV de la figure 4 dans un autre dispositif selon l'invention.

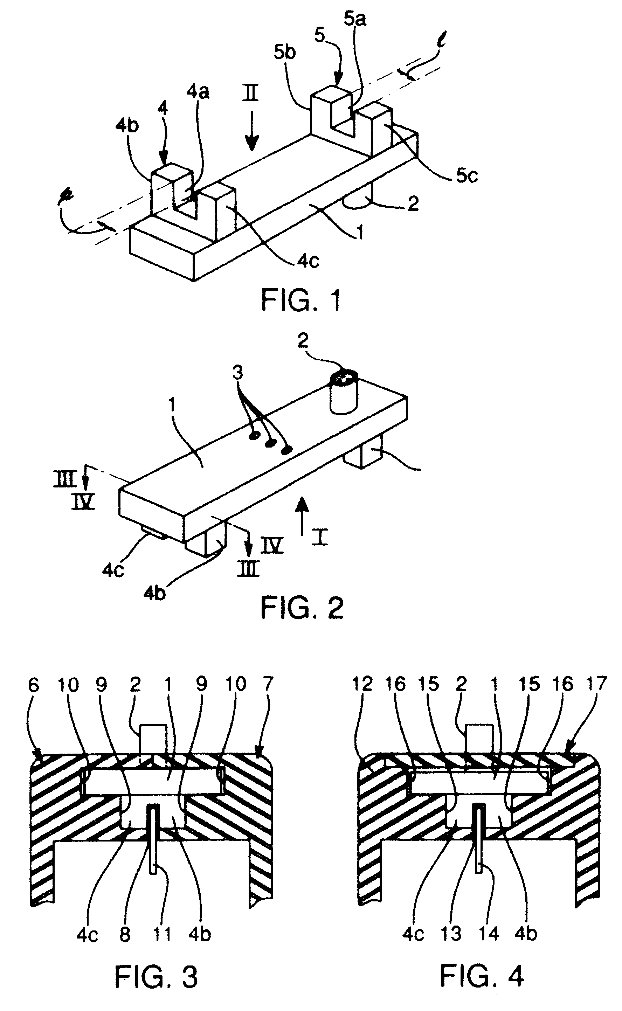

En référence aux figures 1 et 2, un module de détection selon l'invention comprend un boîtier 1 contenant une carte électronique de petite dimension permettant la transmission au moyen d'un connecteur 2 à trois broches d'un signal représentatif de l'état du dispositif à un automate programmable ou une centrale de commande non représentée. Le boîtier 1 peut porter trois diodes électroluminescentes 3 fournissant une indication visuelle de l'état du dispositif.

Le boîtier 1 porte deux capteurs optiques à transmission 4 et 5. Les capteurs optiques à transmission 4 et 5 possèdent chacun un émetteur optique 4a, Sa émettant un faisceau lumineux dirigé vers un récepteur optique en regard. La largeur 1 de transmission du capteur optique est déterminée par construction, tandis que la profondeur p de pénétration d'une cible ou d'un drapeau à détecter est également déterminée par construction.

De préférence chaque capteur 4, 5 optique à transmission est un capteur à fourche comprenant une branche 4b, 5b avec un émetteur optique 4a, 5a et une autre branche 4c, 5c portant un récepteur optique.

Ainsi, lors du passage d'un élément opaque produisant une interruption du faisceau lumineux produit par l'émetteur optique 4a ou 5a, l'interruption du faisceau lumineux engendre un signal d'indication de position du dispositif sur lequel est monté le module de détection.

De préférence, chaque capteur optique à transmission 4, 5 est un capteur à rayonnement infrarouge, étant entendu que toute longueur d'onde de rayonnement peut être utilisée dans le cadre de la présente invention, cette longueur d'onde pourrait être située dans le domaine des rayonnements visibles ou des rayonnements non perceptibles.

Bien que la transmission du signal soit décrite dans cet exemple au moyen d'un connecteur 2 monté solidaire du boîtier 1, l'invention s'étend également à tout mode de transmission de signal, au moyen d'un câble pénétrant dans le boîtier 1, ou par tout autre moyen de liaison filaire ou sans fil.

Une transmission par fibre optique, servant également d'élément émetteur ou d'élément récepteur peut ainsi être envisagée sans sortir du cadre de la présente invention.

En référence à la figure 3, un module de détection selon l'invention comportant un boîtier 1 et deux branches 4b, 4c est monté dans un dispositif de serrage comportant un corps assemblé à partir de deux demi-corps 6, 7. De préférence les demi-corps 6, 7 sont symétriques et présentent des usinages adaptés pour constituer d'une part une fente 8 et des évidements 9, 10.

La fente 8 est adaptée au passage d'un drapeau 11 ou cible de détection apte à passer entre les branches 4b, 4c du capteur optique à fourche 4 pour interrompre le faisceau optique et fournir un signal de position à un automate programmable ou une centrale de commande non représentée. Généralement le drapeau 11 ou cible est lié à un équipage mobile d'actionnement d'un bras de serrage ou moyen de maintien ou de positionnement équivalent.

Du fait de l'emprisonnement du boîtier 1 dans les évidements 10 et des capteurs 4 et 5 dans les évidements 9, le module de détection selon l'invention est complètement protégé par ce montage en ne laissant apparaître en sortie que le connecteur 2, des lumières pouvant éventuellement être prévues pour permettre d'observer l'état des diodes électroluminescentes 3 si celles-ci sont présentes.

En référence à la figure 4, un module de détection selon l'invention est monté dans un corps 12 constitué par usinage d'un bloc unique. Le bloc 12 comporte une fente 13 permettant le passage d'un drapeau 14 ou cible lié à un équipage mobile, ainsi que deux évidements 15, 16 pour loger respectivement les capteurs optiques à transmission 4, 5 et le boîtier 1.

Un couvercle 17 est avantageusement prévu pour protéger le module de détection selon l'invention et obturer le corps 12. Le couvercle 17 est agencé pour permettre la transmission d'un signal de position à un automate programmable ou une centrale de commande non représentés, par exemple en étant pourvu d'un orifice de passage d'un connecteur 2.

Selon une variante non représentée, les montages des figures 3 et 4 peuvent être simplifiés dans le cas où le module de détection présente une conformation apte à obturer le corps du dispositif de manière sensiblement étanche : cette variante permet de se servir du boîtier 1 du dispositif comme couvercle d'obturation d'un évidement pratiqué dans une face du corps du dispositif, ce qui en facilite le montage, le démontage ou l'échange et permet en outre un affichage de position directement sur le boîtier 1 du dispositif au moyen des diodes électroluminescentes 3 ou d'un autre moyen d'indication ou d'affichage tel que, par exemple, un affichage à cristaux liquides.

De préférence, la largeur d'une fente 8 ou 13 est inférieure à la largeur 1 de transmission du capteur optique 4 ou 5 adjacent à la fente 8 ou 13.

L'invention décrite en référence à quatre modes de réalisation particuliers n'y est nullement limitée, mais couvre au contraire toute modification de forme et toute variante de réalisation dans le cadre et l'esprit de l'invention.

## Revendications

1. Dispositif de positionnement, de maintien ou de serrage de pièce de carrosserie, du type comportant un corps (6-7, 12) présentant une fente (8) permettant le passage d'une cible ou d'un drapeau (11, 14) à détecter, caractérisé en ce que le corps (6-7, 12) est équipé d'un module de détection comportant au moins deux capteurs optiques ( 4, 5) à transmission pour détecter la position d'une dite cible ou drapeau (11, 14) et en ce que ladite fente (8, 13) présente une largeur inférieure à la largeur (1) de transmission du capteur optique (4 ou 5).

2. Dispositif selon la revendication 1, dans lequel le corps est assemblé à partir de deux demi-corps (6, 7), caractérisé en ce que le module est monté dans des évidements (9, 10), pratiqués chacun dans un demi-corps (6 ou 7).

3. Dispositif selon la revendication 1, dans lequel le corps (12) est constitué par usinage d'un bloc unique, caractérisé en ce que le module est monté dans un évidement (15-16) du corps (12) apte à être obturé par un couvercle (17).

4. Dispositif selon l'une quelconque des revendications précédentes, caractérisé en ce que le module de détection présente une conformation apte à obturer le corps (6-7 ou 12) du dispositif de manière sensiblement étanche.

5. Module de détection pour dispositif selon l'une quelconque des revendications précédentes, caractérisé en ce que le module comporte un boîtier (1) portant au moins deux capteurs à fourche (4, 5) et en ce que le module de détection présente une conformation apte à obturer le corps (6-7 ou 12) du dispositif.

6. Module selon la revendication 5, caractérisé en ce que chaque capteur optique (4 ou 5) à transmission est un capteur à fourche comprenant une branche (4b ou 5b) avec un émetteur optique (4a ou 5a) et une branche (4c ou 5c) à récepteur optique.

7. Module selon la revendication 5 ou la revendication 6, caractérisé en ce que chaque capteur (4 ou 5) optique à transmission est un capteur à rayonnement infrarouge.
